# EUROPEAN PATENT APPLICATION

(11) **EP 4 571 183 A1**
(43) Date of publication of application: **18.06.2025**
(21) Application number: 23216089.5
(22) Date of filing: 13.12.2023
(51) Int. Cl.: F22B 33/18

(54) **METHOD OF HEATING A FLUID AND TUBE ARRANGEMENT OF A FLUID HEATING FURNACE FOR SUCH A METHOD**

(71) Applicant: GE Energy Power Conversion Technology Limited, Rugby, Warwickshire CV21 1BD (GB)
(72) Inventor: PERMUY, Alfred, 91140 VILLEBON-SUR-YVETTE (FR)
(74) Representative: Casalonga

(57) **Abstract**

Tube arrangement for a fluid heating furnace, comprising at least one tube comprising an electrically conductive material for the passage of an electrical current along the wall of said tube.

## Description

### TECHNICAL FIELD

The present invention generally relates to the heating of a fluid in a tube arrangement, notably for steam cracking.

In particular, the invention concerns a tube arrangement for a fluid heating furnace, a fluid heating furnace including such a tube arrangement, and a fluid heating method using such a fluid heating furnace.

### BACKGROUND

Steam cracking is a petrochemical process for converting light alkane molecules, such as ethane, or mainly naphtha, into alkenes. Alkenes, more commonly known as olefins, are the basis of the industry of many products in various fields such as cosmetics, pharmaceuticals or aeronautics, and especially the basis of the production of plastics.

During the steam cracking process, the hydrocarbon is thermally cracked at very high temperature in steam cracking furnaces, in the presence of water vapour.

Classically, the cracking furnaces contain tubes within which the cracking reaction takes place, as well as gas burners positioned on both sides of the tubes.

The mixture of hydrocarbons and steam circulates through the tubes, passing through the area heated by the burners.

The heating step is therefore based on the combustion of gas. Due to the required heating temperature of the mixture, generally between 800 and 1000°C, steam cracking consumes a large amount of energy and leads to a high CO₂ emission.

Consequently, the present invention intends to overcome these disadvantages by providing heating means for steam cracking process that reduces pollutant emissions.

### BRIEF DESCRIPTION

One object of the invention is a tube arrangement for a fluid heating furnace, comprising at least one tube comprising an electrically conductive material for the passage of an electrical current along the wall of said tube.

In the present invention, the term "electrically conductive material" refers to a material having an electrical conductivity greater than or equal to 10⁴ Ω⁻¹.m⁻¹.

Preferably, said at least one tube comprises a plurality of juxtaposed portions of a same tube and/or of several tubes arranged in at least one compact bunch of tube portions.

In an embodiment, the cross-section of the tube portions of said bunch may be arranged in a circular pattern.

Preferably, said at least one tube comprises at least one pin, more preferably a plurality of pins, such as a U-shaped tube, a W-shaped tube or a serpentine tube.

Advantageously, the tube arrangement may comprise at least one electrical insulator IS1 placed between said at least one tube and the rest of the tube arrangement to limit the flow of electric current from the at least one tube to the rest of the tube arrangement.

Advantageously, the tube arrangement may comprise a current inlet for supplying current along the wall of the plurality of tubes, and a current outlet.

Preferably, the current inlet is located downstream of an electrical insulator IS1, "downstream" being considered in relation to the fluid path along the plurality of tubes.

Preferably, the current outlet is located upstream of an electrical insulator IS1, the term "upstream" being considered in relation to the fluid path along the plurality of tubes.

Advantageously, the tube arrangement comprises at least one element for positioning and retaining the at least one tube in the steam cracking furnace, said element for positioning and retaining comprising at least one an electrical insulator IS1.

Advantageously, said at least one electrical insulator IS1 comprises an electrically insulating material, a ferromagnetic material, a coil, a solenoid or a combination thereof.

As an example, said at least one electrical insulator IS1 may comprise a toroid made of ferromagnetic material.

In an embodiment, the tube arrangement may comprise a plurality of electrical insulator IS2 arranged to form a serpentine path for electricity along the tube arrangement.

For example, said at least one tube may comprise at least first and second horizontal tubes and a plurality of vertical tubes fluidically connecting said first and second horizontal tubes, the tube arrangement comprising a plurality of electrical insulator IS2 located on portions of the first and second horizontal tubes so as to form a serpentine path for electricity along the tube arrangement.

Advantageously, said plurality of electrical insulator IS2 may comprise a ferromagnetic material, a coil, a solenoid or a combination thereof.

As an example, said plurality of electrical insulator IS2 may comprise a toroid made of ferromagnetic material.

In an embodiment, said at least one tube comprises a plurality of tubes, the tube arrangement comprising at least one inductor located around two adjacent parallel tubes of said plurality of tubes of the tube arrangement to force the current to create opposite magnetic fields so as to form a serpentine path for electricity along the tube arrangement.

For example, said at least one tube comprises at least two horizontal tubes and a plurality of vertical tubes fluidically connecting said two horizontal tubes, the tube arrangement comprising at least one inductor located around two adjacent parallel tubes of said plurality of vertical tubes to force the current to create opposite magnetic fields.

In another embodiment, said at least one tube may comprise an odd number of pair of first and second tubes, the first tube of each pair comprising first and second ends and the second tube of each pair comprising first and second ends,
the first ends of the first and second tubes of each pair being fluidically and electrically connected, and the second ends of the first and second tubes of the pair being fluidically and electrically connected,
the first ends and the seconds ends of the first and second tubes of each pair being connected to ground,
a current inlet I₁ being positioned on the first tube of each pair, centrally between the grounding of the first ends and the grounding of the second ends, and
a current outlet I₂ being positioned on the second tube of each pair, centrally between the grounding of the first ends and the grounding of the second ends.

As an example, said at least one tube may comprise at least three pair of first and second tubes.

Another object of the invention is a furnace for heating a fluid comprising at least one tube arrangement as previously described.

The invention also concerns a method for heating a fluid comprising the following steps:
- introducing a fluid into said at least one tube of a fluid heating furnace as previously described; and
- heating the fluid by injecting an electric current along the wall of said at least one tube.

Advantageously, the cross-section of the tube portions of said bunch may be arranged in a circular pattern, preferably the hottest tubes being arranged in the center of the circular pattern and the coldest tubes being arranged in the periphery.

Advantageously, the method for heating a fluid may comprise increasing the frequency of the electric current flowing through the wall of said at least one tube to obtain a skin effect.

Preferably, the method for heating a fluid comprises increasing the frequency of the electric current flowing through the wall of two adjacent parallel tubes of the tube arrangement to beneficiate of proximity effect.

Advantageously, the method for heating a fluid may comprise increasing the inductance of at least one electrical insulator IS1 located between said at least one tube of the tube arrangement in order to limit the flow of electric current from said at least one tube to the rest of the arrangement.

In an embodiment, the fluid introduced into said at least one tube of said fluid heating furnace is a mixture of hydrocarbon and water vapour for steam cracking.

### BRIEF DESCRIPTION OF THE DRAWINGS

Other advantages and features of the invention will appear from the detailed description of embodiments of the invention, which are nonlimiting examples, illustrated on the appended drawings of which:
[Fig 1] is a steam cracking furnace including a tube arrangement according to an embodiment of the invention.
[Fig 2] is a sectional view of a tube arrangement for steam cracking furnace according to another embodiment of the invention.
[Fig 3] is a tube arrangement for steam cracking furnace according to another embodiment of the invention.
[Fig 4] is a tube arrangement for steam cracking furnace according to another embodiment of the invention.
[Fig 5] is a tube arrangement for steam cracking furnace according to another embodiment of the invention.
[Fig 6A] is a tube arrangement for steam cracking furnace according to another embodiment of the invention.
[Fig 6B] is a schematic illustration of the tube arrangement of figure 6A.

### DETAILED DESCRIPTION

In what follows, the terms "at least one" used in this description is equivalent to the terms "one or more".

Furthermore, the elements common to the different embodiments have similar references.

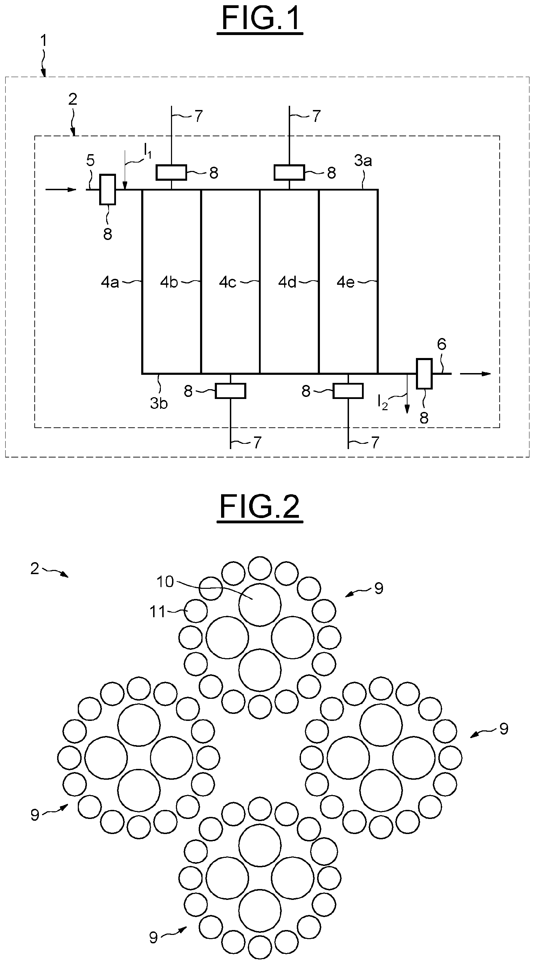

Figure 1 shows a steam cracking furnace for steam cracking of hydrocarbons in the presence of water vapour. The steam cracking furnace includes a tube arrangement 2 within which the steam cracking reaction is intended to take place.

In the illustrated example, the tube arrangement 2 comprises a plurality of tubes.

The plurality of tubes illustrated in Figure 1 comprises an electrically conductive material allowing the passage of an electrical current along the wall of the plurality of tubes.

In an alternative embodiment, the tube arrangement 2 may comprise a single tube.

For example, the single tube or the plurality of tubes of the tube arrangement can be made of 310 stainless steel.

The electrical conduction properties of the plurality of tubes allow direct heating, by Joule effect, of the mixture circulating in the plurality of tubes.

The plurality of tubes of the tube arrangement 2 may comprise at least two horizontal tubes and a plurality of vertical tubes connecting said at least two horizontal tubes.

In the example shown in Figure 1, the plurality of tubes comprises first and second horizontal tubes 3a et 3b and first, second, third, fourth and fifth vertical tubes 4a, 4b, 4c, 4d and 4e fluidically connecting the first and second horizontal tubes 3a and 3b.

The tube arrangement 2 comprises an inlet 5 for the feed of mixture of hydrocarbon and water vapour into the tube arrangement 2, and an outlet 6 for conveying the mixture obtained by steam cracking out of the tube arrangement 2.

The tube arrangement 2 comprises a current inlet I₁ for supplying current along the wall of the plurality of tubes, including first and second horizontal tubes 3a et 3b and first, second, third, fourth and fifth vertical tubes 4a, 4b, 4c, 4d and 4e.

The tube arrangement 2 also comprises a current outlet I₂.

Advantageously, the tube arrangement 2 comprises at least one element for positioning and retaining 7 the plurality of tubes in the steam cracking furnace 1.

In the example illustrated in Figure 1, the tube arrangement 2 comprises four elements for positioning and retaining 7 the plurality of tubes in the steam cracking furnace 1.

To prevent damage in the steam cracking furnace, the tube arrangement 2 may comprise one or a plurality of electrical insulator IS1 8.

Preferably, the current inlet I₁ is located downstream of an electrical insulator IS1 8, "downstream" being considered in relation to the fluid path along the plurality of tubes.

Preferably, the current outlet I₂ is located upstream of an electrical insulator IS1 8, the term "upstream" being considered in relation to the fluid path along the plurality of tubes.

The electrical insulators IS1 8 prevent any damage of the steam cracking furnace 1.

Preferably, the tube arrangement 2 also comprise, advantageously, at least one electrical insulator IS1 8 placed between the plurality of tubes and the rest of the tube arrangement 2 in order to limit the flow of electric current from the plurality of tubes towards the rest of the tube arrangement 2.

The steam cracking furnace 1 illustrated in Figure 1 also comprises four electrical insulators IS1 8, each positioned on one of the four elements for positioning and retaining 7.

In an embodiment, the electrical insulator IS1 8 comprises an electrically insulating material, which can be positioned on the elements for positioning and retaining 7, such as ceramic material.

In the present invention, the term "electrical insulator" refers to an element having an electrical conductivity lower or equal to 10⁴ Ω⁻¹.m⁻¹.

Advantageously, the electrical insulator IS1 8 or the plurality of electrical insulators IS1 8 may comprise an electrically insulating material, a ferromagnetic material, a coil, a solenoid or a combination thereof that increase the value of the inductance in order to reduce or even stop the flow of electrical current from the plurality of tubes of the tube arrangement 2 towards the rest of the tube arrangement 2 and the rest of steam cracking furnace 1.

As an example, at least one of the electrical insulators IS1 8 may comprise a toroid made of ferromagnetic material. The toroid made of ferromagnetic material can be arranged around the element for positioning and retaining 7.

As an example, the electrical insulator IS1 8 may comprise an electrically insulating material such as a ceramic material.

The electrical insulators IS1 8 located upstream of the current inlet I₁ must allow the fluid to enter the tube arrangement 2 to pass through.

Besides, the electrical insulators IS1 8 located downstream of the current outlet I₂ must allow the fluid to exit the tube arrangement 2.

In this respect, the electrical insulators IS1 8 located upstream of the current inlet I₁ and the electrical insulators IS1 8 located downstream of the current outlet I₂ can be, for example, a toroid made of ferromagnetic material.

Referring now to Figure 2, the plurality of tubes of the tube arrangement 2 may comprise a plurality of juxtaposed portions of a several tubes arranged in at least one compact bunch of tube portions.

In another embodiment, the plurality of tubes of the tube arrangement 2 may comprise a plurality of juxtaposed portions of a same tube arranged in at least one compact bunch of tube portions.

In another embodiment, the plurality of tubes of the tube arrangement 2 may comprise a plurality of juxtaposed portions of a same tube and a plurality of juxtaposed portions of several tubes, arranged in at least one compact bunch 9 of tube portions.

The compact bunches 9 of tube portions minimize heat loss and enhance heat transfer in order to increase heating of the mixture of hydrocarbon and water vapour circulating in the plurality of tubes of the tube arrangement 2.

The plurality of tubes of the tube arrangement 2 may also include tubes of several diameters.

In the illustrated example of Figure 2, the tube arrangement 2 includes four bunches 9 of compact tube portions.

Besides, the cross-section of the tube portions of a compact bunch of tube portions may, advantageously, be arranged in a circular pattern.
the illustrated bunches of tube portions comprise tubes of at least two different diameters. The largest diameter tubes 10 are arranged in the center of the circular pattern and the smallest diameter tubes 11 are arranged in the periphery.

Preferably, the hottest tubes 10 are arranged in the center of the circular pattern and the coldest tubes 11 are arranged in the periphery of the circular pattern.

This arrangement further minimizes heat loss and further enhances heat transfer. The heat radiates from the hottest tubes and is captured by the coldest tubes placed around them.

Advantageously, the steam cracking furnace 1 can comprise electrical bars and transformers in order to supply electrical current to the tube arrangement 2.

Heating steam cracking tubes by the Joule effect requires a high electrical current to be supplied, implying the need for large electrical conductors.

As an example, for a tube arrangement 2 comprising a single tube or a plurality of tubes with a diameter of 10 cm and a wall thickness of 2 cm, the electrical resistance, which is 4.10-4Ω/m at 1100K, is particularly low. An electrical current of 9 kA and a voltage of 40V are required for a length tube of 10 meters.

According to a feature, the electrical resistance of the single tube or the plurality of tubes of the tube arrangement 2 can be increased.

The electrical resistance can be increased by modifying the geometrical aspect of the tube arrangement 2.

In an embodiment, the electrical resistance can be increased by increasing the distance the electrical current covers, and therefore the length of the single tube or the plurality of tubes of the tube arrangement 2.

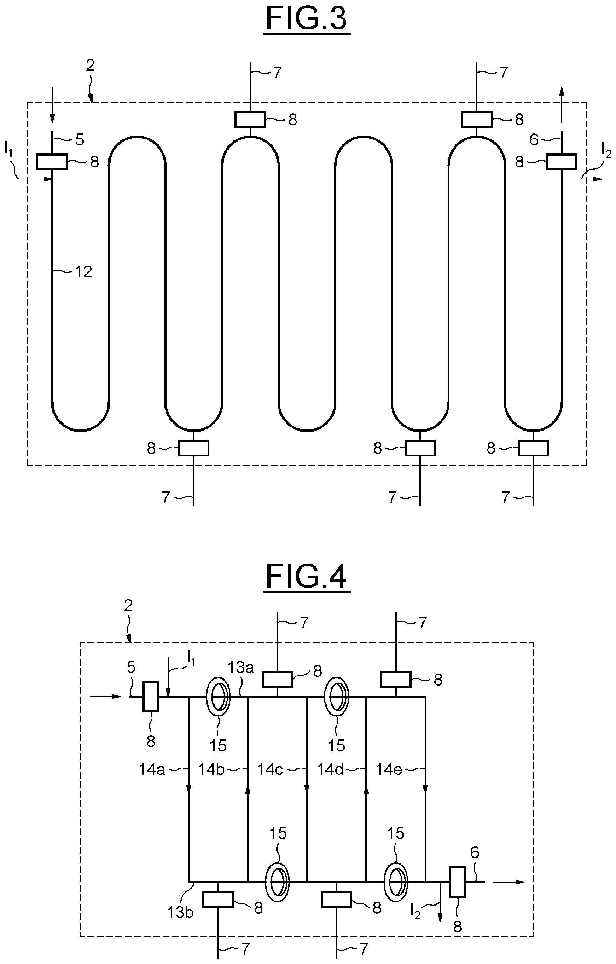

In order to increase the length of the single tube or plurality of tubes of the tube arrangement 2, the latter may comprise, as shown in Figure 3, at least one tube which includes at least one pin, such as having a U shape, a W shape or a serpentine shape.

In the illustrated example in Figure 3, in which identical parts are given identical references, the tube arrangement 2 comprises one serpentine-shaped tube 12 having a serpentine shape and including six pins.

The presence of pins makes it possible to lengthen the single tube or the plurality of tubes, which leads to an increase in the electrical resistance of the current flowing along the wall of said tubes.

By increasing the electrical resistance, the total electrical current required for Joule heating along the plurality of tubes wall is reduced, making it easier to supply the electrical current to said tubes of the tube arrangement 2 and to connect them for this purpose. Indeed, large electrical conductors are no longer necessary.

Furthermore, Figure 4 illustrates an embodiment of the tube arrangement 2 wherein the tube arrangement 2 comprises first and second horizontal tubes 13a et 13b and first, second, third, fourth and fifth vertical tubes 14a, 14b, 14c, 14d and 14e fluidically connecting the first and second horizontal tubes 13a and 13b.

The tube arrangement 2 also comprises a current inlet I₁ and a current outlet I₂.

Advantageously, the current inlet I₁ is located downstream of an electrical insulator IS1 8, and the current outlet I₂ is located upstream of an electrical insulator IS1 8.

The first and second horizontal tubes 13a and 13b comprises an inlet 5 for the mixture of hydrocarbon and water vapour and an outlet 6 for the mixture obtained by steam cracking.

Advantageously, the tube arrangement 2 also comprises at least one element for positioning and retaining 7 the plurality of horizontal and vertical tubes 13a, 13b, 14a, 14b, 14c, 14d and 14e in the steam cracking furnace 1.

The tube arrangement 2 illustrated in Figure 4 also comprises a plurality of electrical insulator IS1 8 located on the elements for positioning and retaining 7.

Besides, the tube arrangement 2 comprises a plurality of electrical insulators IS2 15 located on portions of the first and second horizontal tubes 13a, 13b so as to form a serpentine path for electricity along the tube arrangement 2.

Advantageously, the electrical insulators IS2 15 may comprise electrically insulating material, a ferromagnetic material, a coil, a solenoid or a combination thereof.

As the illustrated example in Figure 4, the electrical insulators IS2 15 may comprise a toroid made of ferromagnetic material.

As an alternative, the presence of electrical insulators IS2 15 makes it possible to lengthen the path for electrical current, which leads to an increase in the electrical resistance of the current flowing along the wall of horizontal and vertical tubes 13a, 13b, 14a, 14b, 14c, 14d and 14e.

In order to lengthen the path for electrical current, the tube arrangement 2 may comprise, as an alternative, one inductor or a plurality of inductors 16 each located around two adjacent parallel tubes of the plurality of tubes of the tube arrangement 2. Each inductor 16 force the current to create opposite magnetic fields. The composition of the magnetic fields in said two adjacent parallel tubes leads to an increase in the power dissipated in each of said two adjacent parallel tubes, so that the current zigzags along the tube arrangement 2.

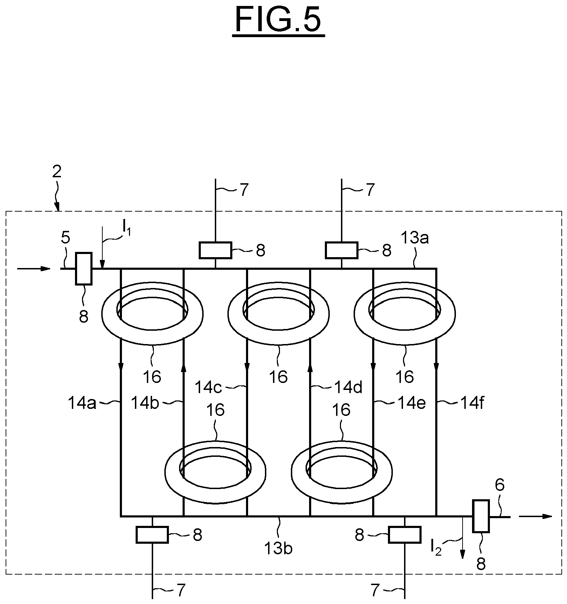

As illustrated in Figure 5, the tube arrangement 2 comprises first and second horizontal tubes 13a and 13b and first, second, third, fourth, fifth and sixth vertical tubes 14a, 14b, 14c, 14d and 14e fluidically connecting the first and second horizontal tubes 13a and 13b.

The tube arrangement 2 illustrated in Figure 5 also comprises five inductors 16. A first inductor 16 is located around the first and second vertical tubes 14a and 14b, a second inductor 16 is located around the second and third vertical tubes 14b and 14c, a third inductor 16 is located around the third and fourth vertical tubes 14c and 14d, a fourth inductor 16 is located around the fourth and fifth vertical tubes 14d and 14eand a sixth inductor 16 is located around the fifth and sixth vertical tubes 14e and 14f.

In the illustrated example, the inductor 16 are toroid made of ferromagnetic material. Both magnetic fields of each inductor 16 is located, respectively, on one of two adjacent parallel vertical tubes. Both magnetic fields of each inductor 16 cancels out and limit the passage of electric current to force the current to zigzag along the tube arrangement 2 and lengthen its path.

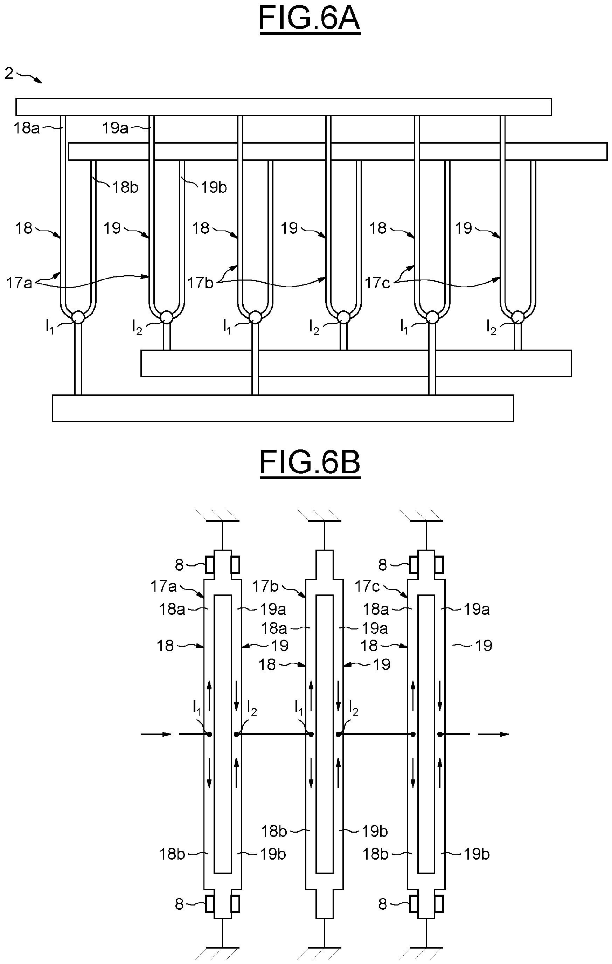

Furthermore, Figures 6A and 6B illustrate a tube arrangement 2 comprising three pairs 17a, 17b, 17c of first and second tubes 18 and 19.

The first tube 18 of each pair 17a, 17b, 17c comprises a first end 18a and a second end 18b. Besides, the second tube 19 of each pair 17a, 17b, 17c comprises a first end 19a and a second end 19b.

The first end 18a of the first tube 18 and the first end 19a of the second tube 19 of each pair 17a, 17b, 17c are fluidically and electrically connected. Besides, the second end 18b of the first tube 18 and the second end 19b of the second tube 19 of each pair 17a, 17b, 17c are fluidically and electrically connected.

Electrically connected means that the first end 18a of the first tube 18 and the first end 19a of the second tube 19 are connected such that an electrical current can flow along the wall of the first and second tubes 18, 19, from the first end 18a of the first tube 18 to the first end 19a of the second tube 19.

The first end 18a of the first tube 18 and the first end 19a of the second tube 19 of each pair 17a, 17b, 17c are connected to ground. Besides, the second end 18b of the first tube 18 and the second end 19b of the second tube 19 of each pair 17a, 17b, 17c are connected to ground.

A current inlet I₁ is positioned on the first tube 18 of each pair 17a, 17b, 17c, and positioned centrally between the grounding of the first ends 18a, 19a and the grounding of the second ends 18b, 19b.

Besides, a current outlet I₂ is positioned on the second tube 19 of each pair 17a, 17b, 17c, centrally between the grounding of the first ends 18a, 19a and the grounding of the second ends 18b, 19b.

In the illustrated example in Figures 6A and 6B, the tube arrangement 2 also comprises a first vertical tube 20 fluidically and electrically connecting the first end 18a, 19a of the first and second tubes 18, 19 of each pair 17a, 17b, 17c, and a second vertical tube 21 fluidically and electrically connecting the second end 18b, 19b of the first and second tubes 18, 19 of each pair 17a, 17b, 17c.

Advantageously, the first and second tubes 18, 19 of each pair 17a, 17b, 17c are arranged in a U-shape.

Such a configuration provides a symmetrical voltage, which means that the voltage between the current inlet I₁ positioned on the first tube 18 of each pair 17a, 17b, 17c and the grounding of the first ends 18a, 19a is opposite to the voltage between the current inlet I₁ positioned on the first tube 18 of each pair 17a, 17b, 17c and the grounding of the second ends 18b, 19b.

The sum of the voltages applied to points I₁ and I₂ corresponding, respectively, to the current inlet and the current outlet, is equal to zero.

This eliminates the need for an electrical insulator IS1 8 between the pair of first and second tubes 18, 19 located in the middle of the set of pairs 17a, 17b, 17c and the rest of the tube arrangement 2. Of course, the various features, variants and/or embodiments of the present invention may be associated with one another in various combinations insofar as they are not incompatible or mutually exclusive.

The invention also concerns a steam cracking method, comprising the following steps:
- introducing a mixture of hydrocarbon and water vapour into the single tube or the plurality of tubes of a steam cracking furnace as previously described; and
- heating the mixture of hydrocarbon and water vapour by injecting an electric current along the wall of the single tube or the plurality of tubes of the tube arrangement 2 for the steam cracking of the hydrocarbon.

The electrically conductive material of the single tube or the plurality of tubes of the tube arrangement 2 allows a direct injection of electrical current along their walls.

The direct injection of electrical current along the wall of the single tube or the plurality of tubes of the tube arrangement 2 and the resulting heating by Joule effect enables an efficient steam cracking reaction without polluting emissions.

Preferably, the electrical resistance of the single tube or the plurality of tubes of the tube arrangement 2 is increased in order to reduce the electrical current required for heating.

For this purpose, the steam cracking method may, advantageously, comprise increasing the frequency of the electric current flowing through the wall of the single tube or the plurality of tubes of the tube arrangement 2 to obtain a skin effect.

The skin effect refers to the tendency of alternating electrical current to flow near the surface or skin of a conductor, increasing the electrical resistance. In the present invention, the conductor is formed by a single tube or a plurality of tubes of the tube arrangement 2 comprising an electrically conductive material.

Advantageously, the frequency may be increased to a value ranging between 500 Hz and several kHz.

In the embodiment illustrated in figure 5, increasing the frequency also increases the efficiency of electrical insulation provided by the electrical insulators IS2 15.

Increasing the frequency also increases the efficiency of electrical insulation provided by the electrical insulator IS1 8.

Thus, by increasing the electrical resistance by skin effect, it is possible to facilitate the flow of electrical current to the tubes of the tube arrangement 2 and their connection.

In order to reduce the electrical current required for heating, the steam cracking method can comprise, advantageously, increasing the frequency of the electric current flowing through the wall of two adjacent parallel tubes of the tube arrangement 2 to beneficiate of proximity effect.

The composition of the magnetic fields in said two adjacent parallel tubes leads to an increase in the power dissipated in each of said two adjacent parallel tubes.

Advantageously, the steam cracking method may comprise increasing the inductance of at least one electrical insulator IS1 8 located between the single tube or the plurality of tubes of the tube arrangement and the rest of the tube arrangement 2 in order to limit the flow of electric current from said at least one tube to the rest of the arrangement.

In the illustrated example, the fluid heating method is a steam cracking method comprising the electrical heating of the mixture of hydrocarbons and water vapour which is a gas.

In another embodiment, the fluid heating method may refer to a method other than steam cracking and may comprise heating a fluid other than a gas.

## Claims

1. Tube arrangement for a fluid heating furnace (1), comprising at least one tube comprising an electrically conductive material for the passage of an electrical current along the wall of said tube.

2. Tube arrangement according to claim 1, wherein said at least one tube comprises a plurality of juxtaposed portions of a same tube and/or of several tubes arranged in at least one compact bunch (9) of tube portions.

3. Tube arrangement according to claim 2, wherein the cross-section of the tube portions of said bunch (9) are arranged in a circular pattern.

4. Tube arrangement according to any of preceding claims, comprising at least one electrical insulator IS1 (8) placed between said at least one tube and the rest of the tube arrangement (2) to limit the flow of electric current from the at least one tube to the rest of tube the arrangement (2).

5. Tube arrangement according to claim 4, comprising at least one element for positioning and retaining (7) the at least one tube in the steam cracking furnace (1), said element for positioning and retaining (7) comprising at least one of said electrical insulator IS1 (8).

6. Tube arrangement according to claim 4 or 5, wherein said at least one electrical insulator IS1 (8) comprises an electrically insulating material, a ferromagnetic material, a coil, a solenoid or a combination thereof.

7. Tube arrangement according to any of preceding claims, wherein the tube arrangement (2) comprises a plurality of electrical isolator IS2 (15) arranged to form a serpentine path for electricity along the tube arrangement (2).

8. Tube arrangement according to claim 7, wherein said plurality of electrical insulator IS2 (15) comprise an electrically insulating material, a ferromagnetic material, a coil, a solenoid or a combination thereof.

9. Tube arrangement according to any of claims 1 to 6, wherein said at least one tube comprises a plurality of tubes, the tube arrangement (2) comprising at least one inductor (16) located around two adjacent parallel tubes of said plurality of tubes of the tube arrangement (2) to force the current to create opposite magnetic fields so as to form a serpentine path.

10. Tube arrangement according to any of claims 1 to 6, wherein said at least one tube comprises an odd number of pair of first and second tubes, the first tube of each pair comprising first and second ends and the second tube of each pair comprising first and second ends,
the first ends of the first and second tubes of each pair being fluidically and electrically connected, and the second ends of the first and second tubes of the pair being fluidically and electrically connected,
the first ends and the seconds ends of the first and second tubes of each pair being connected to ground,
a current inlet (Ii) being positioned on the first tube of each pair, centrally between the grounding of the first ends and the grounding of the second ends, and
a current outlet (I₂) being positioned on the second tube of each pair, centrally between the grounding of the first ends and the grounding of the second ends.

11. Furnace for heating a fluid comprising at least one tube arrangement according to any of preceding claims.

12. Method for heating a fluid comprising the following steps:
- introducing a fluid into said at least one tube of a fluid heating furnace according to claim 11; and
- heating the fluid by injecting an electric current along the wall of said at least one tube.

13. Method according to claims 12 and 3, wherein the cross-section of the tube portions of said bunch (9) are arranged in a circular pattern, preferably the hottest tubes (10) being arranged in the center of the circular pattern and the coldest tubes (11) being arranged in the periphery.

14. Method according to claim 12 or 13, comprising increasing the frequency of the electric current flowing through the wall of said at least one tube to obtain a skin effect.

15. Method according to any of claims 12 to 14, comprising increasing the frequency of the electric current flowing through the wall of two adjacent parallel tubes of the tube arrangement to beneficiate of proximity effect.

16. Method according to any of claims 12 to 15, comprising increasing the inductance of at least one electrical insulator IS1 located between said at least one tube of the tube arrangement and the rest of the tube arrangement in order to limit the flow of electric current from said at least one tube to the rest of the arrangement.

17. Method according to any of claims 12 to 16, wherein the fluid introduced into said at least one tube of said fluid heating furnace is a mixture of hydrocarbon and water vapour for steam cracking.
